# EUROPÄISCHE PATENTANMELDUNG

(11) **EP 1 078 796 A2**
(43) Veröffentlichungstag der Anmeldung: **28.02.2001**
(21) Anmeldenummer: 00118357.3
(22) Anmeldetag: 24.08.2000
(51) Int. Cl.: B60J 7/043

(54) **Fahrzeugdach mit in eine geräuschoptimierte Ausstellposition betätigbarem Deckel**

(30) Priorität: 26.08.1999 DE 19940520
(71) Anmelder: Webasto Vehicle Systems International GmbH, 82131 Stockdorf (DE)
(72) Erfinder: Stark, Roger, Simpsonville, SC 29681 (US); Laux, Philipp, 81929 München (DE); Katzmeier, Matthias, 86836 Klosterlechfeld (DE)
(74) Vertreter: Wiese, Gerhard

(57) **Zusammenfassung**

Fahrzeugdach mit einem Deckel (3), der in einer Schließstellung eine Dachöffnung (5) in einer festen Dachfläche verschließt und der mittels eines vorzugsweise motorischen Antriebs ausgehend von der Schließsstellung über einen Ausstellmechanismus um eine nahe seiner Vorderkante liegende Achse schwenkbar und mit seiner Hinterkante über die Dachfläche ausstellbar sowie über einen Verschiebemechanismus nach hinten über die Dachfläche verschiebbar ist. Erfindungsgemäß ist vorgesehen, daß der Deckel (3) vor seiner Verschiebung nach hinten mit seiner Hinterkante über den Ausstellmechanismus in eine geräuschoptimierte Lüftungs-Ausstellposition betätigbar ist, die unter der Ausstellposition (3') zu liegen kommt, in welcher der Deckel (3) nach hinten verschiebbar ist.

## Beschreibung

Die Erfindung bezieht sich auf ein Fahrzeugdach mit einem Deckel, der in einer Schließstellung eine Dachöffnung in einer festen Dachfläche verschließt und der mittels eines motorischen Antriebs ausgehend von der Schließsstellung über einen Ausstellmechanismus um eine nahe seiner Vorderkante liegende Achse schwenkbar und mit seiner Hinterkante über die Dachfläche ausstellbar sowie über einen Verschiebemechanismus nach hinten über die Dachfläche schiebbar ist.

Ein Fahrzeugdach dieser Art ist beispielsweise aus der DE 197 13 348 C1 bekannt. Gemäß dieser Druckschrift ist die Verschiebebewegung des Deckels von dessen Ausstellbewegung mechanisch entkoppelt.

Ein weiteres Fahrzeugdach der eingangs genannten Art ist aus der DE 35 32 111 A1 bekannt. Gemäß dieser Druckschrift sind dem Verschiebemechanismus und dem Ausstellmechanismus getrennte Motoren zugeordnet.

Aus der JP 57-121924 A ist eine speziell gebogene Führungsschiene für den Deckel eines Fahrzeugdachs der eingangs genannten Art bekannt (siehe Fig. 4, 5 und 6), die beim Ausstellen des Deckels eine stärkere Neigung von dessen Hinterkante als beim Verschieben bewirkt.

Bei keinem der vorstehend erläuterten Fahrzeugdächer finden sich Hinweise auf eine Überführung des Deckels in eine Lüfterstellung, in welcher dessen Hinterkante über die Dachfläche vorsteht. Da in jedem Fall die Hinterkante des Deckels bei den in Rede stehenden Fahrzeugdächern in eine maximale Ausstellposition überführt wird, bevor der

Deckel nach hinten verschoben wird, bedeutet dies für eine hypothetische Lüfterstellung des Deckels, die theoretisch realisierbar ist, bevor der Deckel in seine hintere Stellung über der festen Dachfläche bewegt wird, in welcher die Dachöffnung vollständig freigegeben ist, daß dem hierbei in der Fahrgastzelle erzeugten Windgeräusch nicht optimal Rechnung getragen wird.

Die Aufgabe der vorliegenden Erfindung besteht deshalb darin, ein Fahrzeugdach der eingangs genannten Art zu schaffen, das in seiner Lüfterstellung minimales Windgeräusch in der Fahrgastzelle erzeugt.

Gelöst wird diese Aufgabe durch die Merkmale des Anspruchs 1. Vorteilhafte Weiterbildungen der Erfindung sind in den Unteransprüchen angegeben.

Demnach ist erfindungsgemäß vorgesehen, die Hinterkante des Deckels in eine geräuschoptimierte Ausstellposition zu bewegen, wenn der Deckel in Lüfterstellung verwendet werden soll. Diese Ausstellposition liegt erfindungsgemäß unter der maximalen Ausstellposition der Hinterkante des Deckels, die erforderlich ist, um diesen über die feststehende Dachfläche nach hinten zu verschieben.

Gemäß einer vorteilhaften Weiterbildung der Erfindung ist die geräuschoptimierte Ausstellposition der Hinterkante des Deckels in Lüfterstellung variabel. Hierdurch ist es möglich, den unterschiedlich starken Windgeräuschen in der Fahrgastzelle in Abhängigkeit der Fahrzeuggeschwindigkeit Rechnung zu tragen. Dies kann entweder manuell erfolgen, indem eine Bedienperson die der Lüfterstellung des Deckels entsprechende Ausstellposition seiner Hinterkante in einem Bereich variiert, der unterhalb der maximalen Ausstellposition des Deckels liegt. Gemäß einer besonders vorteilhaften Weiterbildung der Erfindung erfolgt diese geräuschoptimierte Einstellung der Ausstellposition der Hinterkante des Deckels jedoch automatisch, beispielsweise abhängig von einem Geschwindigkeitssignal, das dem Tachometer des Fahrzeugs entnommen ist, oder einem Staudruckabhängigen Signal, welches den Deckel-Aufstellmechanismus ansteuert.

Nachfolgend wird die Erfindung anhand der Zeichnung beispielhaft näher erläutert; es zeigt:
- Fig. 1: eine schematische perspektivische Ansicht eines Fahrzeugdachs mit geschlossenem Deckel,
- Fig. 2: eine Darstellung gemäß Fig. 1 bei vollständig geöffnetem Deckel,
und
- Fig. 3: schematisch den sich in windgeräuschoptimierter Ausstellposition befindlichen Deckel.

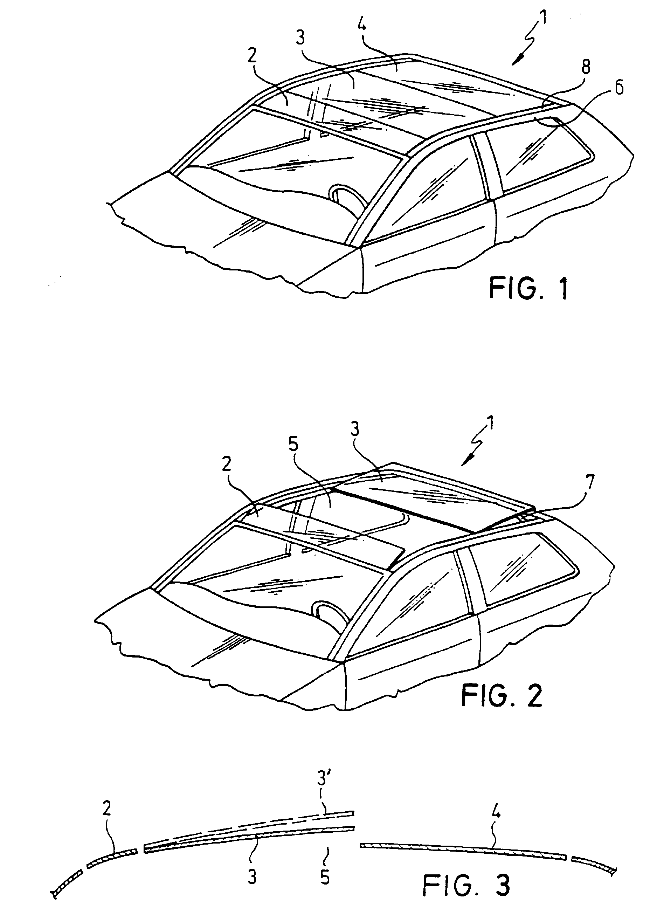

In Fig. 1 und 2 ist ein Fahrzeugdach allgemein mit der Bezugsziffer 1 bezeichnet. Das Fahrzeugdach 1 besteht aus einer oberhalb der Windschutzscheibe angeordneten, schwenkbaren Windabweislamelle 2, einem in bezug auf die Fahrtrichtung des Fahrzeugs hinter derselben liegenden verschiebbaren Deckel 3 sowie einer an diesen anschließenden festen Dachscheibe 4. Die Dachscheibe 4 kann alternativ durch einen Abschnitt der festen Dachhaut ersetzt sein. Anstelle der festen Dachscheibe 4 kann auch ein weiterer in einer Öffnungsstellung aufstellbarer Deckel vorgesehen sein. Seitlich werden die Windabweislamelle 2, der Deckel 3 und die Dachscheibe von Seitenholmen 6 begrenzt.

In dem in Fig. 1 gezeigten geschlossenen Zustand bietet das Fahrzeugdach 1 ein vollkommen glattflächiges Erscheinungsbild. Der Deckel 3 wird zur teilweisen oder vollständigen Freigabe einer Dachöffnung 5 um eine nahe seiner Vorderkante liegende Achse mit seiner Hinterkante zunächst in eine Ausstellposition über das feste Fahrzeugdach 1 ausgestellt, die in Fig. 3 strichliert gezeigt ist und eine maximale Ausstellposition von zumindest diskreten Ausstellpositionen bildet, wie nachfolgend erläutert. In der in Fig. 3 strichliert gezeigten maximalen Ausstellposition wird der Deckel 3 zur Freigabe der Dachöffnung 5 nach hinten über das feste Fahrzeugdach 1 verschoben. Bevorzugt sind hierzu keinerlei oberhalb des festen Fahrzeugdachs 1 angeordnete Führungen erforderlich. Im ausgestellten und nach hinten verfahrenen Zustand, der in Fig. 2 gezeigt ist, wird der Deckel 3 beispielsweise mittels seitlich im Bereich der Hinterkante des Deckels 3 angelenkte Stützhebel 7 abgestützt, welche in unterhalb des Niveaus des festen Fahrzeugdachs 1 angeordneten Führungen verfahrbar sind und beim Austreten nach oben ein flexibles Dachdichtelement 8 teilweise verdrängen, welches zwischen den Seitenholmen 6 und den Dachteilen 2, 3 und 4 angeordnet ist. Wegen Einzelheiten des Ausstellmechanismus und des Verschiebemechanismus für den Deckel 3 wird beispielsweise auf die DE 197 13 348 C1 verwiesen.

Wie aus Fig. 2 hervorgeht, ist bei vollständig geöffnetem Deckel 3, in welcher Position dieser die Dachöffnung 5 vollständig freigibt, die Windabweiserlamelle 2 in eine um ihre Vorderachse aufwärts gekippte Position verstellt, um das im Fahrgastraum bei geschlossenen seitlichen Fenstern auftretende Windgeräusch in Gestalt von Wummern zu minimieren.

Wie aus Fig. 3 hervorgeht, ist zusätzlich zu der maximalen Ausstellposition der Hinterkante des Deckels 3', die strichliert gezeigt ist, eine weitere Ausstellposition vorgesehen, in welcher der Deckel 3 eine arretierte Lüfterstellung einnimmt, in welcher der Deckel 3 sich mit seiner Vorderkante zumindest im Wesentlichen noch in Schließstellung befindet. Diese Ausstellposition, die in Fig. 3 mit durchgezogener Linie gezeigt ist, liegt unterhalb der strichliert gezeigten maximalen Ausstellposition 3' der Hinterkante des Deckels 3 und ist erfindungsgemäß so gewählt, daß das durch den ausgestellten Deckel 3 im Fahrgastraum erzeugte Windgeräusch minimal ist. Es handelt sich demnach bei der in Fig. 3 mit durchgezogener Linie gezeigten Position des Deckels 3 um eine geräuschoptimierte Ausstellposition.

In die geräuschoptimierte Ausstellposition läßt sich der Deckel 3 beispielsweise mit Hilfe desselben manuellen Stellelements verfahren, das auch zur Auslösung der Bewegung des Deckels 3 in seine vollständige Öffnungsstellung genutzt wird. In diesem Fall ist bevorzugt eine erste Rastposition dieses Stellelements vorgesehen. Alternativ hierzu kann ein getrenntes Stellelement vorgesehen sein, um den Deckel 3 mit seiner Hinterkante in die geräuschoptimierte Ausstellposition zu betätigen.

Gemäß einer vorteilhaften Variante ist die geräuschoptimierte Ausstellposition der Hinterkante des Deckels 3 innerhalb eines vorbestimmten Ausstellbereichs, der unterhalb der maximalen Ausstellposition des Deckels 3 liegt, variabel. Hierdurch ist erreichbar, daß die Ausstellposition des Deckels 3, d.h. dessen Lüfterposition, zugunsten eines minimalen Windgeräusches in der Fahrgastzelle manuell optimierbar ist. Alternativ hierzu kann eine geräuschoptimierte Ausstellposition des Deckels 3 automatisch erzielt werden, indem die Geschwindigkeit des Fahrzeugs herangezogen wird, die Lüfter-Ausstellposition des Deckels 3 abhängig von der Fahrzeuggeschwindigkeit geräuschoptimiert mittels eines vom Geschwindigkeitssignal abgeleiteten Stellsignals für den Deckel-Aufstellmechanismus einzustellen.

Die Verstellung des Deckels 3 erfolgt bevorzugt mittels eines nicht dargestellten Elektromotors, der mittels eines Bedienschalters betätigbar ist. Dieser Bedienschalter fährt beispielsweise beim ersmaligen Antippen in Öffnungsrichtung zunächst die geräuschoptimierte Ausstell- oder Lüfterposition des Deckels 3 an. Eine weitere nachfolgende Betätigung führt dann zu einem Verschieben des Deckels 3 über das feste Fahrzeugdach, wobei ebenfalls mehrere Zwischenrasten aber auch eine stufenlose Betätigung vorgesehen sein können.

Die Erfindung ist in einer abgewandelten Form auch für ein manuell mittels eines Kurbeltriebs betätigbares Hebeschiebedach verwendbar. Dabei läßt sich die Kurbel zunächst nur bis zu einem mechanischen Anschlag drehen, der ein geräuschoptimierte Lüfterposition definiert. Erst durch mechanisches Entrasten des Anschlags kann dann durch weiteres Kurbeln die vollständige Ausstellhöhe und das anschließende Verschieben des Deckels nach hinten erreicht werden.

### Bezugszeichenliste

- 1: Fahrzeugdach
- 2: Windabweislamelle
- 3: Deckel
- 4: Dachscheibe
- 5: Dachöffnung
- 6: Seitenholme
- 7: Stützhebel
- 8: Dichtelement

## Patentansprüche

1. Fahrzeugdach mit einem Deckel (3), der in einer Schließstellung eine Dachöffnung (5) in einer festen Dachfläche (1) verschließt und der mittels eines Antriebs ausgehend von der Schließsstellung über einen Ausstellmechanismus um eine nahe seiner Vorderkante liegende Achse schwenkbar und mit seiner Hinterkante über die Dachfläche (1) ausstellbar sowie über einen Verschiebemechanismus nach hinten über die Dachfläche (1) schiebbar ist, **dadurch gekennzeichnet**, daß der Deckel (3) vor seiner Verschiebung nach hinten mit seiner Hinterkante über den Ausstellmechanismus in eine geräuschoptimierte Lüftungs-Ausstellposition bewegt wird, die unter der Ausstellposition (3') zu liegen kommt, in welcher der Deckel (3) nach hinten verschiebbar ist.

2. Fahrzeugdach nach Anspruch 1, **dadurch gekennzeichnet**, daß die geräuschoptimierte Ausstellposition der Hinterkante des Deckels (3) variabel ist.

3. Sonnenschutz nach Anspruch 2, **dadurch gekennzeichnet**, daß die geräuschoptimierte Ausstellposition der Hinterkante des Deckels (3) in Abhängigkeit von der Fahrzeuggeschwindigkeit variabel ist.

4. Fahrzeugdach nach einem der vorhergehenden Ansprüche, **dadurch gekennzeichnet**, daß der Antrieb von einem Elektromotor gebildet wird.
